# EUROPÄISCHE PATENTSCHRIFT

(11) **EP 3 658 427 B1**
(45) Veröffentlichungstag und Bekanntmachung des Hinweises auf die Patenterteilung: **14.04.2021**
(21) Anmeldenummer: 18727771.0
(22) Anmeldetag: 24.05.2018
(51) Int. Cl.: B60S 1/56, B60S 3/04

(54) **VERFAHREN ZUM STEUERN WENIGSTENS EINER WASCHVORRICHTUNG WENIGSTENS EINES AN EINER AUSSENKONTUR EINES FAHRZEUGS ANGEORDNETEN SENSORS**
METHOD FOR CONTROLLING AT LEAST ONE WASHING DEVICE OF AT LEAST ONE SENSOR ARRANGED ON AN OUTER CONTOUR OF A VEHICLE
PROCÉDÉ POUR COMMANDER AU MOINS UN DISPOSITIF DE LAVAGE D'AU MOINS UN CAPTEUR AGENCÉ SUR UN CONTOUR EXTÉRIEUR D'UN VÉHICULE

(30) Priorität: 28.07.2017 DE 102017213019
(43) Veröffentlichungstag der Anmeldung: 03.06.2020
(73) Patentinhaber: Robert Bosch GmbH, 70442 Stuttgart (DE)
(72) Erfinder: KOBERSTAEDT, Markus, 77815 Buehl (DE); LIEBICH, Kai Clemens, 76185 Karlsruhe (DE); BAMOHAMED, Zakarya, 67100 Strasbourg (FR)
(86) Internationale Anmeldenummer: PCT/EP2018/063670
(87) Internationale Veröffentlichungsnummer: WO 2019/020245

(56) Entgegenhaltungen:
- DE-A1-102010 055 113
- DE-A1-102013 209 242
- DE-T2- 69 809 508
- US-A1- 2016 362 089

## Beschreibung

### Stand der Technik

Die Erfindung beschreibt ein Verfahren, eine Recheneinheit und ein Fahrzeug zum Steuern wenigstens einer Waschvorrichtung wenigstens eines an einer Außenkontur des Fahrzeugs angeordneten Sensors.

Waschvorrichtungen für Sensoren sind aus dem Stand der Technik bekannt. So wird z.B. in dem Dokument DE 10 2010 055 113 A1 eine Reinigungsvorrichtung mit einer Spritzdüse beschrieben, deren Spritzbereich auf einen Umgebungssensor gerichtet ist. Solche Waschvorrichtungen sind sehr wichtig, da Verunreinigungen der Sensoren zu einem großen Verlust der Sensorgenauigkeit führen können. So führt z.B. eine verschmutzte Membran eines Ultraschallsensors dazu, dass die Membran schlechter schwingen kann. Ein verschmutztes Objektiv einer Kamera kann dazu führen, dass die Kamera ungenaue Aufnahmen erstellt.

Auch Verfahren zum Erkennen einer durchgeführten Fahrzeugwäsche sind aus dem Stand der Technik bekannt. Durch diese Erkennung soll z.B. verhindert werden, dass die Wischanlage automatisch eingeschaltet wird, wenn sich das Fahrzeug in einer Waschanlage befindet. So ist z.B. in dem Dokument DE 698 09 508 T2 beschrieben, wie ein Einklappen des Seitenspiegels als Zeichen dafür dient, dass sich das Fahrzeug in einer Waschanlage befinden kann und darauf folgend der Scheibenwischer abgeschaltet wird.

Aufgabe der Erfindung ist die Entwicklung eines Verfahrens und einer Vorrichtung, welche die Nutzung einer Waschvorrichtung für Sensoren effizienter gestaltet.

### Offenbarung der Erfindung

Zur Lösung der Aufgabe werden erfindungsgemäß ein Verfahren und eine Recheneinheit zum Steuern wenigstens einer Waschvorrichtung wenigstens eines an einer Außenkontur des Fahrzeugs angeordneten Sensors vorgeschlagen. Außerdem wird ein Fahrzeug, welches die erfindungsgemäße Recheneinheit aufweist, vorgeschlagen.

In dem Verfahren zum Steuern wenigstens einer Waschvorrichtung wenigstens eines an einer Außenkontur eines Fahrzeugs angeordneten Sensors wird zunächst eine durchgeführte Fahrzeugwäsche der Außenkontur des Fahrzeugs erkannt. Mit den Sensoren sind hierbei z.B. Abstandssensoren gemeint, welche die Umgebung eines Fahrzeugs erfassen und hierzu an der äußeren Karosserie des Fahrzeugs angeordnet sind. Eine durchgeführte Fahrzeugwäsche führt dazu, dass die außen angebrachten Sensoren ebenfalls mitgereinigt werden und nach einer Fahrzeugwäsche entsprechend davon ausgegangen werden kann, dass diese Sensoren nun von Verschmutzungen befreit sind. Erfindungsgemäß werden in Abhängigkeit einer erkannten Fahrzeugwäsche, welche z.B. in einer Waschstraße durchgeführt wurde, erste Steuersignale zur Ansteuerung der wenigstens einen Waschvorrichtung des wenigstens einen Sensors erzeugt. Vorzugsweise werden die ersten Steuersignale derart erzeugt, dass die wenigstens eine Waschvorrichtung des wenigstens einen Sensors in Abhängigkeit einer erkannten durchgeführten Fahrzeugwäsche vorübergehend ausgeschaltet wird. Somit kann z.B. Spritzwasser für die Düsen einer Sensor-Waschvorrichtung eingespart werden.

Bevorzugt wird weiterhin in Abhängigkeit einer solchen Ausschaltung der wenigstens einen Sensor-Waschvorrichtung die Zeit erfasst. Abhängig von der Zeiterfassung wird das Verfahren wieder von vorne gestartet und die wenigstens eine Waschvorrichtung wieder angeschaltet, falls innerhalb einer vordefinierten ersten Zeitdauer keine weitere durchgeführte Fahrzeugwäsche erkannt wird. Somit wird auf eine Situation reagiert, bei der der Besitzer des Fahrzeugs oft eine Fahrzeugwäsche durchführen lässt, sodass alleine damit eine ausreichende Sauberkeit des wenigstens einen Sensors garantiert werden kann. Ein Wiedereinschalten der Waschvorrichtung ist nur dann nötig, wenn innerhalb einer gewissen Zeit, z.B. innerhalb von einer Woche, keine weitere Fahrzeugwäsche durchgeführt wurde. Alternativ hierzu wird bevorzugt ebenfalls in Abhängigkeit einer Ausschaltung der wenigstens einen Sensor-Waschvorrichtung die Zeit erfasst. Hierbei wird aber auf jeden Fall, unabhängig ob eine weitere Fahrzeugwäsche durchgeführt wurde oder nicht, die wenigstens eine Waschvorrichtung des wenigstens einen Sensors wieder angeschaltet, falls die erfasste Zeit eine vordefinierte zweite sicherheitskritische Zeitdauer überschreitet. Somit wird die Sicherheit für eine geringe Verschmutzung eines Sensors erhöht und damit eine erhöhte Sensorgenauigkeit garantiert.

Vorzugsweise werden weiterhin Umgebungsinformationen des Fahrzeugs erfasst und daraus ermittelt, ob eine Situation vorliegt, welche auf ein erhöhtes Risiko für eine Verschmutzung des wenigstens einen an der Außenkontur des Fahrzeugs angeordneten Sensors hindeutet. Solch eine Situation kann beispielsweise ein Fahren über einen matschigen Untergrund repräsentieren. In Abhängigkeit einer solchen erkannten Situation wird die wenigstens eine Sensor-Waschvorrichtung wieder eingeschaltet. Auch damit wird Sicherheit für eine geringe Verschmutzung eines Sensors erhöht und damit eine erhöhte Sensorgenauigkeit garantiert.

Vorzugweise kann eine Situation, die ein erhöhtes Risiko für eine Verschmutzung des wenigstens einen an der Außenkontur des Fahrzeugs angeordneten Sensors repräsentiert, auch in Abhängigkeit einer erfassten Aktivierung einer Frontscheibenreinigungsvorrichtung und/oder einer erfassten Aktivierung einer Heckscheibenreinigungsvorrichtung des Fahrzeugs erkannt werden. Hierbei wird davon ausgegangen, dass die Verschmutzung, welche durch die aktivierte Scheibenreinigungsvorrichtung entfernt wurde, auch an dem wenigstens einen Sensor an der Außenkontur des Fahrzeugs vorhanden ist. In Abhängigkeit einer solchen erkannten Situation wird die wenigstens eine Waschvorrichtung wieder eingeschaltet.

Vorzugsweise wird wenigstens eine Bewegung wenigstens eines Wischerarms eines Fahrzeugscheibenwischers erfasst. Hierbei wird die Gegebenheit ausgenutzt, dass wenn die Bürsten einer Waschanlage über das Auto rotieren, diese unter anderem an den Wischerarmen ziehen. Dieses Ziehen hat eine leichte Winkelveränderung der Wischerarme und damit eine Bewegung zur Folge. Um sicherzugehen, dass es sich aber auch wirklich um eine erkannte Fahrzeugwäsche handelt, wird zudem wenigstens eine Betriebsgröße des Fahrzeugs erfasst. Bei der Betriebsgröße handelt es sich um eine Größe, die den aktuellen Betrieb des Fahrzeugs kennzeichnet. Hierbei handelt es sich z.B. um den aktuellen Lenkwinkel und/oder die Geschwindigkeit des ersten Fahrzeugs. In Abhängigkeit der erfassten Bewegung des wenigstens einen Wischerarms und der erfassten wenigstens einen Betriebsgröße wird anschließend eine durchgeführte Fahrzeugwäsche erkannt. Somit wird die Empfindlichkeit zur Erkennung einer Fahrzeugwäsche und damit auch die Sicherheit für eine geringe Verschmutzung eines Sensors erhöht. Bevorzugt handelt es sich bei der erfassten Betriebsgröße des Fahrzeugs um eine erfasste Drehgeschwindigkeit wenigstens eines Rades des Fahrzeugs. Somit kann sichergestellt werden, dass sich das Fahrzeug im Stand befindet und daraus wiederum besser geschlussfolgert werden, ob die erfasste Bewegung des Wischerarms auf z.B. Wind zurückzuschließen ist oder wirklich aufgrund einer Fahrzeugwäsche erfasst wurde.

Die Erfindung umfasst zudem eine Recheneinheit, welche ausgebildet ist, das erfindungsgemäße Verfahren auszuführen.

Zusätzlich umfasst die Erfindung ein Fahrzeug, wie z.B. ein Kraftfahrzeug, welches die Recheneinheit aufweist. Das Fahrzeug weist zudem wenigstens einen an der Außenkontur des Fahrzeugs angeordneten Sensor auf. Hierbei kann es sich z.B. um einen Abstandssensor zum Einparken handeln. Des Weiteren weist das Fahrzeug wenigstens eine Waschvorrichtung für den wenigstens einen an der Außenkontur des Fahrzeugs angeordneten Sensor auf. Hierbei kann es sich z.B. um eine Spritzwasseranlage für den Sensor handeln. Die Recheneinheit ist in diesem Zusammenhang dazu ausgebildet, eine durchgeführte Fahrzeugwäsche der Außenkontur und damit der äußeren Fläche des Fahrzeugs zu erkennen. Abhängig von der Erkennung einer solchen durchgeführten Fahrzeugwäsche ist die Recheneinheit dazu ausgebildet, die wenigstens eine Waschvorrichtung des wenigstens einen an der Außenkontur des Fahrzeugs angeordneten Sensors anzusteuern.

Vorzugweise weist das Fahrzeug eine erste Erfassungseinheit zur Erfassung wenigstens einer Bewegung wenigstens eines Wischerarms eines Scheibenwischers des Fahrzeugs auf. Hierbei kann es sich z.B. um einen Beschleunigungssensor handeln, welcher am Wischerarm angeordnet ist. Weiterhin weist das Fahrzeug eine zweite Erfassungseinheit zur Erfassung wenigstens einer Betriebsgröße des Fahrzeugs auf. Hierbei kann es sich z.B. um einen Drehzahlensensor für ein Rad des Fahrzeugs handeln. Die Recheneinheit ist hierbei dazu ausgebildet, die erfasste Bewegung des Wischerarms und die erfasste Betriebsgröße zu empfangen und in Abhängigkeit dieser erfassten Größen eine durchgeführte Fahrzeugwäsche zu erkennen.

Bevorzugt weist das Fahrzeug zusätzlich weiterhin eine dritte Erfassungseinheit zur Erfassung der Zeit auf. Hierbei kann es sich um eine Uhr handeln. Die Recheneinheit ist dazu ausgebildet, erste Steuersignale zur Ansteuerung der wenigstens einen Sensor-Waschvorrichtung so zu erzeugen, dass die wenigstens eine Waschvorrichtung des wenigstens einen Sensors bei einer erkannten durchgeführten Fahrzeugwäsche vorübergehend ausgeschaltet wird. Bei einer Ausschaltung der wenigstens einen Waschvorrichtung des wenigstens einen Sensors steuert die Recheneinheit die dritte Erfassungseinheit an. Vorzugweise weist das Fahrzeug zusätzlich eine vierte Erfassungseinheit zur Erfassung von Umgebungsinformationen des Fahrzeugs auf. Hierbei kann es sich z.B. um eine Kamera oder einen Abstandssensor handeln. Es kann sich hierbei insbesondere um den gleichen, wenigstens einen Sensor handeln, dessen Waschvorrichtung erfindungsgemäß gesteuert wird. Die Recheneinheit ist hierbei dazu ausgebildet ist, eine Situation, die ein erhöhtes Risiko für eine Verschmutzung des wenigstens einen an der Außenkontur des Fahrzeugs angeordneten Sensors repräsentiert in Abhängigkeit der erfassten Umgebungsinformationen zu erkennen, und in Abhängigkeit einer erkannten Situation die wenigstens eine Waschvorrichtung wieder einzuschalten. Weiterhin optional ist die Recheneinheit dazu ausgebildet, eine Situation, die ein erhöhtes Risiko für eine Verschmutzung des wenigstens einen an der Außenkontur des Fahrzeugs angeordneten Sensors repräsentiert in Abhängigkeit einer erfassten Aktivierung einer Frontscheibenreinigungsvorrichtung und/oder einer erfassten Aktivierung einer Heckscheibenreinigungsvorrichtung des Fahrzeugs zu erkennen.

### Beschreibung der Zeichnungen

Figur 1 zeigt schematisch ein erfindungsgemäßes Fahrzeug.
Figur 2 zeigt eine Ausführungsform der erfindungsgemäßen Recheneinheit.
Figur 3a zeigt einen ersten erfindungsgemäßen Verfahrensablauf zum Steuern wenigstens einer Waschvorrichtung wenigstens eines an einer Außenkontur eines Fahrzeugs angeordneten Sensors.
Figur 3b zeigt einen zweiten erfindungsgemäßen Verfahrensablauf zum Steuern wenigstens einer Waschvorrichtung wenigstens eines an einer Außenkontur eines Fahrzeugs angeordneten Sensors.

### Ausführungsbeispiele

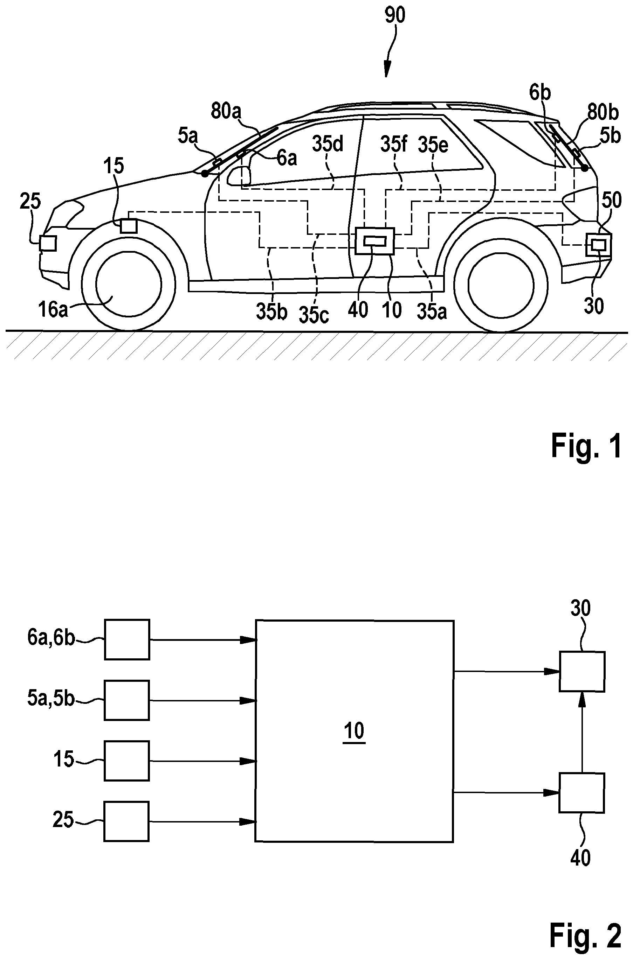

Figur 1 zeigt schematisch ein Fahrzeug 90 mit einer erfindungsgemäßen Recheneinheit 10. Zusätzlich weist das Fahrzeug einen an der Außenkontur des Fahrzeugs 90 angeordneten Sensor 50 und eine Waschvorrichtung 30 für diesen Sensor 50 auf. In diesem Zusammenhang ist eine Datenverbindung 351 zwischen der Recheneinheit 10 und der Waschvorrichtung 30 dargestellt, wodurch die Recheneinheit 10 erste Steuersignale an die Waschvorrichtung 30 übertragen kann. Optional weist das Fahrzeug 90 weiterhin eine erste Erfassungseinheit 5a und/oder 5b zur Erfassung wenigstens einer Bewegung eines Wischerarms 80a und/oder 80b des Fahrzeugs 90 und eine zweite Erfassungseinheit 15 zur Erfassung wenigstens einer Betriebsgröße des Fahrzeugs 90 auf. Hierbei präsentiert der Wischerarm 80a einen Wischerarm der vorderen Scheibenwischers und der Wischerarm 80b einen Wischerarm des Heck-Scheibenwischers. In dieser Figur 1 handelt es sich bei der zweiten Erfassungseinheit 15 um eine Drehzahlerfassungseinheit für ein Rad 16a des Fahrzeugs 90. Weiterhin ist in diesem Zusammenhang eine Datenverbindung 35c und eine Datenverbindung 35e zwischen der ersten Erfassungseinheit 5a und/oder 5b mit der Recheneinheit 10 dargestellt, wodurch die Recheneinheit 10 die erfasste Wischerarmbewegung empfangen kann. Weiterhin ist in diesem Zusammenhang eine Datenverbindung 35b zwischen der zweiten Erfassungseinheit 15 und der Recheneinheit 10 dargestellt, wodurch die Recheneinheit 10 die erfasste Betriebsgröße empfangen kann. Weiterhin optional weist das Fahrzeug eine dritte Erfassungseinheit 40 auf, welche in dieser Figur 1 mit in die Recheneinheit 10 integriert ist. Bei der dritten Erfassungseinheit 40 handelt es sich insbesondere um eine Uhr. Des Weiteren weist das Fahrzeug 90 optional eine vierte Erfassungseinheit 25 zur Erfassung von Umgebungsinformationen des Fahrzeugs 90 auf. Weiterhin optional weist der vordere Scheibenwischer und/oder der Heck-Scheibenwischer eine Frontscheibenreinigungsvorrichtung 6a und/oder eine Heckscheibenreinigungsvorrichtung 6b. Weiterhin ist in diesem Zusammenhang eine Datenverbindung 35d und eine Datenverbindung 35f zwischen der Frontscheibenreinigungsvorrichtung 6a und/oder der Heckscheibenreinigungsvorrichtung 6b mit der Recheneinheit 10 dargestellt, wodurch die Recheneinheit 10 ein erfasstes Aktivierungssignal der Frontscheibenreinigungsvorrichtung 6a und/oder der Heckscheibenreinigungsvorrichtung 6b kann.

Figur 2 zeigt eine Ausführungsform der erfindungsgemäßen Recheneinheit 10 zum Steuern wenigstens einer Waschvorrichtung 30 wenigstens eines an einer Außenkontur eines Fahrzeugs angeordneten Sensors 30. Die Recheneinheit 10 ist hierbei dazu ausgebildet, eine durchgeführte Fahrzeugwäsche der Außenkontur des Fahrzeugs zu erkennen und in Abhängigkeit einer erkannten durchgeführten Fahrzeugwäsche erste Steuersignale zur Ansteuerung wenigstens einer Waschvorrichtung 30 wenigstens eines an der Außenkontur angeordneten Sensors zu erzeugen. Optional ist die Recheneinheit 10 in diesem Zusammenhang dazu ausgebildet, die ersten Steuersignale in Abhängigkeit einer erkannten Fahrzeugwäsche derart zu erzeugen, dass die wenigstens eine Sensor-Waschvorrichtung vorübergehend ausgeschaltet wird. Optional ist die Recheneinheit 10 weiterhin dazu ausgebildet, in Abhängigkeit einer Ausschaltung der wenigstens einen Sensor-Waschvorrichtung zweite Steuersignale zur Ansteuerung einer dritten Erfassungseinheit 40 zur Erfassung der Zeit zu erzeugen.

Optional ist die Recheneinheit 10 dazu ausgebildet, wenigstens eine Bewegung wenigstens eines Wischerarms eines Scheibenwischers des Fahrzeugs von einer ersten Erfassungseinheit 5 zu erfassen. Des Weiteren ist die Recheneinheit 10 optional dazu ausgebildet, wenigstens eine Betriebsgröße des Fahrzeugs von einer zweiten Erfassungseinheit 15 zu empfangen. In Abhängigkeit der empfangenen Bewegung des wenigstens einen Wischerarm und der erfassten wenigstens einen Betriebsgröße des Fahrzeugs erkennt die Recheneinheit 10 eine durchgeführte Fahrzeugwäsche.

Optional ist die Recheneinheit 10 dazu ausgebildet, erfasste Umgebungsinformationen des Fahrzeugs von einer vierten Erfassungseinheit 40 zu empfangen und in Abhängigkeit der erfassten Umgebungsinformationen eine Situation, die erhöhtes Risiko für eine Verschmutzung des wenigstens einen an der Außenkontur des Fahrzeugs angeordneten Sensors repräsentiert, zu erkennen. Die Recheneinheit 10 ist weiter dazu ausgebildet, in Abhängigkeit einer erkannten Situation die wenigstens eine Waschvorrichtung wieder einzuschalten.

Optional ist die Recheneinheit 10 dazu ausgebildet, erfasste Aktivierungssignale einer Frontscheibenreinigungsvorrichtung 6a und/oder eine Heckscheibenreinigungsvorrichtung 6b des Fahrzeugs zu empfangen und in Abhängigkeit der erfassten Aktivierungssignale eine Situation, die erhöhtes Risiko für eine Verschmutzung des wenigstens einen an der Außenkontur des Fahrzeugs angeordneten Sensors repräsentiert, zu erkennen. Die Recheneinheit 10 ist weiter dazu ausgebildet, in Abhängigkeit einer erkannten Situation die wenigstens eine Waschvorrichtung wieder einzuschalten.

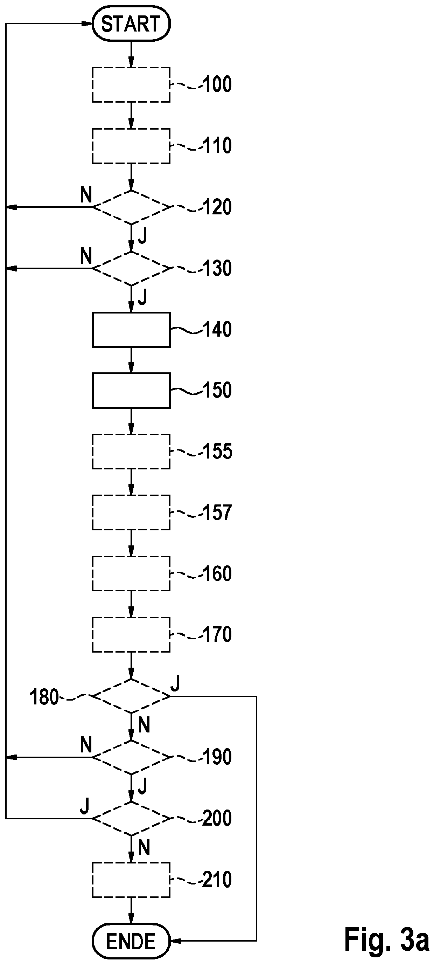

Figur 3a zeigt eine erste Ausführungsform des erfindungsgemäßen Verfahrensablaufs zum Steuern wenigstens einer Waschvorrichtung wenigstens eines an einer Außenkontur eines Fahrzeugs angeordneten Sensors. Hierbei wird in einem ersten Verfahrensschritt 140 eine durchgeführte Wäsche der Fahrzeugaußenkontur erkannt und daraufhin in Verfahrensschritt 150 erste Steuersignale zur Ansteuerung der wenigstens einen Sensor-Waschvorrichtung in Abhängigkeit einer erkannten durchgeführten Fahrzeugwäsche erzeugt. Optional werden die ersten Steuersignale derart erzeugt, dass die wenigstens eine Sensor-Waschvorrichtung in einem folgenden Verfahrensschritt 155 vorübergehend ausgeschaltet wird.

Daraufhin wird das Verfahren beendet.

Weiterhin erfolgt das Erkennen einer durchgeführten Fahrzeugwäsche durch zusätzliche optionale Verfahrensschritte. Hierbei wird in einem Verfahrensschritt 100 wenigstens eine Bewegung eines Wischerarms eines Scheibenwischers des Fahrzeugs und in einem folgenden Verfahrensschritt 110 wenigstens eine Betriebsgröße des Fahrzeugs erfasst. Falls in Verfahrensschritt 120 festgestellt wird, dass eine Bewegung des Wischerarms erfasst wurde und falls zusätzlich in Verfahrensschritt 130 festgestellt wird, dass die erfasste Betriebsgröße des Fahrzeugs auf ein stehendes Fahrzeug außer Betrieb hindeutet, wird in Verfahrensschritt 140 eine durchgeführte Wäsche der Fahrzeugaußenkontur erkannt. Optional repräsentiert die wenigstens eine Betriebsgröße des Fahrzeugs eine erfasste Drehgeschwindigkeit wenigstens eines Rades des Fahrzeugs.

Weiterhin optional wird folgend auf die Abschaltung der Sensor-Waschvorrichtung in Verfahrensschritt 155, in Verfahrensschritt 160 die Zeit erfasst und diese erfasste Zeit in Verfahrensschritt 190 mit einer ersten Zeitschwelle verglichen. Wird hierbei festgestellt, dass die erste Zeitschwelle noch nicht überschritten ist, wird das Verfahren wieder von vorne gestartet. Wird die Zeitschwelle schließlich überschritten, wird in dem folgenden Verfahrensschritt 200 geprüft, ob während der Zeit eine weitere Wäsche durchgeführt wurde. Wurde eine weitere Wäsche der Fahrzeugaußenkontur durchgeführt, bleibt die Sensor-Waschvorrichtung ausgeschaltet und das Verfahren beginnt von vorne oder wird optional beendet. Wurde allerdings keine weitere Fahrzeugwäsche festgestellt, wird in dem folgenden Verfahrensschritt 210 die wenigstens eine Sensor-Waschvorrichtung wieder eingeschaltet.

Weiterhin optional werden in einem auf den Verfahrensschritt 150 folgenden Verfahrensschritt 170 Umgebungsinformationen erfasst und in einem folgenden Verfahrensschritt 180 geprüft, ob sich aus den erfassten Umgebungsinformationen eine Situation ermitteln lässt, die ein erhöhtes Risiko für eine Verschmutzung des wenigstens einen an der Außenkontur des Fahrzeugs angeordneten Sensors repräsentiert. Wird z.B. mittels einer Kamera ein matschiger Untergrund festgestellt, lässt dies auf ein erhöhtes Risiko für eine Sensorverschmutzung schließen. Auch ein Fahren auf einer nassen Autobahn, bei der ein vorausfahrendes Fahrzeug Spritzwasser auf das betreffende Fahrzeug zurückwirft, kann beispielweise zu solch einer Situation führen. Optional wird zur Überprüfung, ob eine Situation vorliegt, die ein erhöhtes Risiko für eine Verschmutzung des wenigstens einen an der Außenkontur des Fahrzeugs angeordneten Sensors repräsentiert, in Verfahrensschritt 157 wenigstens ein Aktivierungssignal einer Frontscheibenreinigungsvorrichtung und/oder einer erfassten Aktivierung einer Heckscheibenreinigungsvorrichtung des Fahrzeugs erfasst. Wird innerhalb einer vorgegebenen dritten Zeitdauer eine vorgegebene Anzahl von Aktivierungssignalen erfasst, kann davon ausgegangen werden, dass das Fahrzeug stark verschmutzt ist und sich dieser Schmutz entsprechend auch auf den Sensoren befindet. Entsprechend würde in diesem Fall eine Situation vorliegen, die auf ein erhöhtes Risiko für eine Sensorverschmutzung hindeutet.

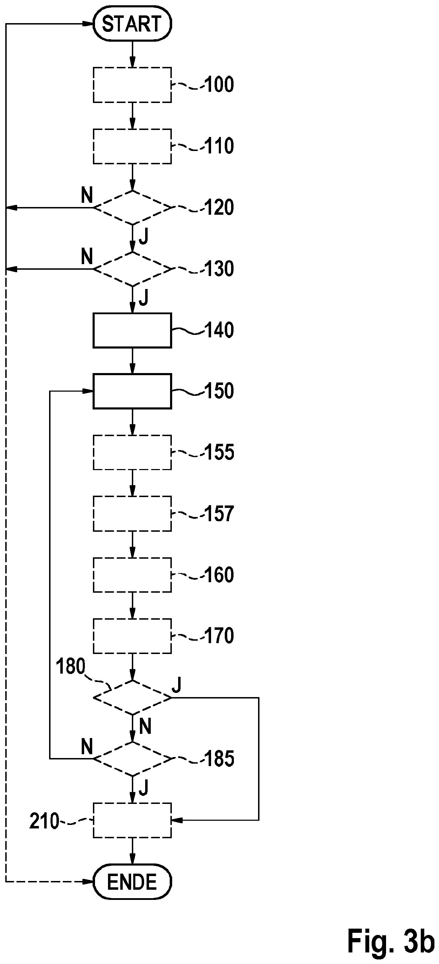

Figur 3b zeigt eine zweite Ausführungsform des erfindungsgemäßen Verfahrens zum Steuern wenigstens einer Waschvorrichtung wenigstens eines an einer Außenkontur eines Fahrzeugs angeordneten Sensors.

Hierbei wird im Unterschied zu dem Verfahrensablauf aus Figur 3a in einem auf den Verfahrensschritt 180 folgenden Verfahrensschritt 185 überprüft, ob die erfasste Zeit eine vordefinierte zweite sicherheitskritische Zeitdauer überschreitet. Überschreitet die Zeit diese zweite Zeitdauer nicht, werden weiterhin in Verfahrensschritt 150 erste Steuersignale zum Ausschalten der wenigstens einen Sensor-Waschvorrichtung erzeugt. Überschreitet die erfasste Zeit schließlich die zweite sicherheitskritische Zeitdauer, wird in Verfahrensschritt 210 die wenigstens eine Sensor-Waschvorrichtung wieder eingeschaltet.

## Patentansprüche

1. Verfahren zum Steuern wenigstens einer Waschvorrichtung (30) wenigstens eines an einer Außenkontur eines Fahrzeugs (90) angeordneten Sensors (50), wobei das Verfahren den folgenden Verfahrensschritt aufweist:
- Erkennen (140) einer durchgeführten Fahrzeugwäsche der Außenkontur des Fahrzeugs (90),
**dadurch gekennzeichnet, dass** das Verfahren den folgenden zusätzlichen Verfahrensschritt aufweist:
- Erzeugen (150) von ersten Steuersignalen zur Ansteuerung der wenigstens einen Waschvorrichtung (30) des wenigstens einen an der Außenkontur des Fahrzeugs (90) angeordneten Sensors (50) in Abhängigkeit einer erkannten durchgeführten Fahrzeugwäsche.

2. Verfahren nach Anspruch 1, **dadurch gekennzeichnet, dass** die ersten Steuersignale zur Ansteuerung der wenigstens einen Waschvorrichtung (30) derart erzeugt werden, dass die wenigstens eine Waschvorrichtung (30) des wenigstens einen Sensors (50) in Abhängigkeit einer erkannten durchgeführten Fahrzeugwäsche vorübergehend ausgeschaltet (155) wird.

3. Verfahren nach einem der Ansprüche 1 oder 2, **dadurch gekennzeichnet, dass** das Erkennen (140) einer durchgeführten Fahrzeugwäsche durch die folgenden Verfahrensschritte erfolgt:
- Erfassen (100) wenigstens einer Bewegung wenigstens eines Wischerarms (80a, 80b) eines Scheibenwischers des Fahrzeugs (90), und
- Erfassen (110) wenigstens einer Betriebsgröße des Fahrzeugs (90), und
- Erkennen (140) der durchgeführten Fahrzeugwäsche in Abhängigkeit der erfassten Bewegung des wenigstens einen Wischerarms (80a, 80b) und der erfassten wenigstens einen Betriebsgröße des Fahrzeugs (90).

4. Verfahren nach Anspruch 3, wobei die wenigstens eine erfasste Betriebsgröße des Fahrzeugs (90) eine erfasste Drehgeschwindigkeit wenigstens eines Rades (16a, 16b) des Fahrzeugs (90) repräsentiert.

5. Verfahren nach einem der Ansprüche 2 bis 4, **dadurch gekennzeichnet, dass** das Verfahren den folgenden zusätzlichen Verfahrensschritt aufweist:
- Erfassen (160) der Zeit in Abhängigkeit einer Ausschaltung (155) der
wenigstens einen Waschvorrichtung (30) des wenigstens einen Sensors (50), wobei das Verfahren abhängig von der Zeiterfassung von vorne beginnt und die wenigstens eine Waschvorrichtung (30) des wenigstens einen Sensors (50) wieder angeschaltet (210) wird, falls innerhalb einer vordefinierten ersten Zeitdauer keine weitere durchgeführte Fahrzeugwäsche erkannt (200)wird.

6. Verfahren nach einem der Ansprüche 2 bis 4, **dadurch gekennzeichnet, dass** Verfahren den folgenden zusätzlichen Verfahrensschritt aufweist:
- Erfassen (160) der Zeit in Abhängigkeit einer Ausschaltung (155) der
wenigstens einen Waschvorrichtung (30) des wenigstens einen Sensors (50), wobei die wenigstens eine Waschvorrichtung (30) des wenigstens einen Sensors (50) wieder angeschaltet (210) wird, falls die erfasste Zeit eine vordefinierte zweite sicherheitskritische Zeitdauer (185) überschreitet.

7. Verfahren nach einem der Ansprüche 2 bis 5, **dadurch gekennzeichnet, dass** das Verfahren die folgenden zusätzlichen Verfahrensschritte aufweist:
- Erfassen (170) von Umgebungsinformationen des Fahrzeugs (90), und
- Erkennen (180) einer Situation, die ein erhöhtes Risiko für eine Verschmutzung des wenigstens einen an der Außenkontur des Fahrzeugs angeordneten Sensors repräsentiert in Abhängigkeit der erfassten Umgebungsinformationen, und
- Einschalten (210) der wenigstens einen Waschvorrichtung in Abhängigkeit einer erkannten Situation.

8. Recheneinheit (10) zum Steuern wenigstens einer Waschvorrichtung (30) wenigstens eines an einer Außenkontur eines Fahrzeugs (90) angeordneten Sensors (50) nach einem Verfahren nach einem der Ansprüche 1 bis 7, wobei die Recheneinheit (10) dazu ausgebildet ist,
- eine durchgeführte Fahrzeugwäsche der Außenkontur des Fahrzeugs (90) zu erkennen, und
- erste Steuersignale zur Ansteuerung wenigstens einer Waschvorrichtung (30) wenigstens eines an der Außenkontur des Fahrzeugs (90) angeordneten Sensors (50) in Abhängigkeit einer erkannten durchgeführten Fahrzeugwäsche zu erzeugen.

9. Recheneinheit (10) nach Anspruch 8, **dadurch gekennzeichnet, dass** die Recheneinheit (10) dazu ausgebildet ist,
- wenigstens eine Bewegung wenigstens eines Wischerarms (80a, 80b) eines Scheibenwischers des Fahrzeugs (90) von einer ersten Erfassungseinheit (5a, 5b) zu empfangen, und
- wenigstens eine Betriebsgröße des Fahrzeugs (90) von einer zweiten Erfassungseinheit (15) zu empfangen, und
- eine durchgeführte Fahrzeugwäsche in Abhängigkeit der empfangenen Bewegung des wenigstens einen Wischerarms (80a, 80b) und der erfassten wenigstens einen Betriebsgröße des Fahrzeugs (90) zu erkennen.

10. Recheneinheit (10) nach einem der Ansprüche 7 oder 8, **dadurch gekennzeichnet, dass** die Recheneinheit (10) dazu ausgebildet ist, die ersten Steuersignale zur Ansteuerung der wenigstens einen Waschvorrichtung (30) derart zu erzeugen, dass die wenigstens eine Waschvorrichtung (30) des wenigstens einen Sensors (50) in Abhängigkeit einer erkannten durchgeführten Fahrzeugwäsche vorübergehend ausgeschaltet wird.

11. Recheneinheit (10) nach Anspruch 9, **dadurch gekennzeichnet, dass** die Recheneinheit (10) dazu ausgebildet ist,
- zweite Steuersignale zum Ansteuern einer dritten Erfassungseinheit (40) zur Erfassung der Zeit in Abhängigkeit einer Ausschaltung (210) der wenigstens einen Waschvorrichtung (30) des wenigstens einen Sensors (50) zu erzeugen.

12. Fahrzeug (90), insbesondere Kraftfahrzeug, mit
- einer Recheneinheit (10) nach Anspruch 8, und
- wenigstens einem an einer Außenkontur des Fahrzeugs (90) angeordneten Sensor (50), und
- wenigstens einer Waschvorrichtung (30) für den wenigstens einen an der Außenkontur des Fahrzeugs (90) angeordneten Sensor (50),
wobei die Recheneinheit (10) dazu ausgebildet ist, eine durchgeführten Wäsche einer Außenkontur des Fahrzeugs (90) zu erkennen, und in Abhängigkeit einer erkannten durchgeführten Fahrzeugwäsche, die wenigstens eine Waschvorrichtung (30) des wenigstens einen an der Außenkontur eines Fahrzeugs (90) angeordneten Sensors (50) anzusteuern.

13. Fahrzeug (90) nach Anspruch 12, wobei das Fahrzeug (90) zusätzlich
- eine erste Erfassungseinheit (5a, 5b) zur Erfassung wenigstens einer Bewegung wenigstens eines Wischerarms (80a, 80b) eines Scheibenwischers des Fahrzeugs (90), und
- eine zweite Erfassungseinheit (15) zur Erfassung wenigstens einer Betriebsgröße des Fahrzeugs (90),
aufweist,
wobei die Recheneinheit (10) dazu ausgebildet ist, die erfasste wenigstens eine Bewegung des wenigstens einen Wischerarms (80a, 80b) und die wenigstens eine Betriebsgröße des Fahrzeugs (90) zu empfangen und eine durchgeführte Fahrzeugwäsche in Abhängigkeit der empfangenen Bewegung des wenigstens einen Wischerarms (80a, 80b) und der erfassten wenigstens einen Betriebsgröße des Fahrzeugs (90) zu erkennen.

14. Fahrzeug (90) nach einem der Ansprüche 12 oder 13, wobei das Fahrzeug (90) zusätzlich
- eine dritte Erfassungseinheit (40), insbesondere eine Uhr, zur Erfassung der Zeit
aufweist,
wobei die Recheneinheit (10) dazu ausgebildet ist, erste Steuersignale zur Ansteuerung der wenigstens einen Waschvorrichtung (30) derart zu erzeugen, dass die wenigstens eine Waschvorrichtung (30) des wenigstens einen Sensors (50) in Abhängigkeit einer erkannten durchgeführten Fahrzeugwäsche vorübergehend ausgeschaltet wird, und in Abhängigkeit einer Ausschaltung (210) der wenigstens einen Waschvorrichtung (30) des wenigstens einen Sensors (50) die dritte Erfassungseinheit (40) anzusteuern.

15. Fahrzeug (90) nach einem der Ansprüche 12 bis 14, wobei das Fahrzeug (90) zusätzlich
- eine vierte Erfassungseinheit (25) zur Erfassung von Umgebungsinformationen des Fahrzeugs (90)
aufweist,
wobei die Recheneinheit (10) dazu ausgebildet ist, eine Situation, die ein erhöhtes Risiko für eine Verschmutzung des wenigstens einen an der Außenkontur des Fahrzeugs (90) angeordneten Sensors (50) repräsentiert in Abhängigkeit der erfassten Umgebungsinformationen zu erkennen, und in Abhängigkeit einer erkannten Situation die wenigstens eine Waschvorrichtung (30) wieder einzuschalten.

## Claims

1. Method for controlling at least one washing device (30) of at least one sensor (50) arranged on an outer contour of a vehicle (90), wherein the method comprises the following method step:
- detecting (140) an executed vehicle wash of the outer contour of the vehicle (90),
**characterized in that** the method comprises the following additional method step:
- generating (150) first control signals for actuating the at least one washing device (30) of the at least one sensor (50), arranged on the outer contour of the vehicle (90), as a function of a detected executed vehicle wash.

2. Method according to Claim 1, **characterized in that** the first control signals for actuating the at least one washing device (30) are generated in such a way that the at least one washing device (30) of the at least one sensor (50) is switched off (155) temporarily as a function of a detected executed vehicle wash.

3. Method according to one of Claims 1 or 2, **characterized in that** the detection (140) of an executed vehicle wash is implemented by means of the following method steps:
- sensing (100) at least one movement of at least one wiper arm (80a, 80b) of a windscreen wiper of the vehicle (90), and
- sensing (110) at least one operational variable of the vehicle (90), and
- detecting (140) the executed vehicle wash, as a function of the sensed movement of the at least one wiper arm (80a, 80b) and the sensed at least one operational variable of the vehicle (90).

4. Method according to Claim 3, wherein the at least one sensed operational variable of the vehicle (90) represents a sensed rotational speed of at least one wheel (16a, 16b) of the vehicle (90).

5. Method according to one of Claims 2 to 4, **characterized in that** the method comprises the following additional method step:
- sensing (160) the time as a function of a deactivation (155) of the at least one washing device (30) of the at least one sensor (50),
wherein the method starts from the beginning as a function of the sensing of time, and the at least one washing device (30) of the at least one sensor (50) is switched on (210) again if no further executed vehicle wash is detected (200) within a predefined first time period.

6. Method according to one of Claims 2 to 4, **characterized in that** the method comprises the following additional method step:
- sensing (160) the time as a function of a deactivation (155) of the at least one washing device (30) of the at least one sensor (50),
wherein the at least one washing device (30) of the at least one sensor (50) is switched on (210) again if the sensed time exceeds a predefined second safety-critical time period (185).

7. Method according to one of Claims 2 to 5, **characterized in that** the method comprises the following additional method steps:
- sensing (170) surroundings information of the vehicle (90), and
- detecting (180) a situation which represents an increased risk for soiling of the at least one sensor which is arranged on the outer contour of the vehicle, as a function of the sensed surroundings information,
and
- switching on (210) the at least one washing device as a function of a detected situation.

8. Computing unit (10) for controlling at least one washing device (30) of at least one sensor (50) which is arranged on an outer contour of a vehicle (90), according to a method according to one of Claims 1 to 7, wherein the computing unit (10) is designed
- to detect an executed vehicle wash of the outer contour of the vehicle (90), and
- to generate first control signals for actuating at least one washing device (30) of at least one sensor (50), arranged on the outer contour of the vehicle (90) as a function of a detected executed vehicle wash.

9. Computing unit (10) according to Claim 8, **characterized in that** the computing unit (10) is designed
- to receive at least one movement of at least one wiper arm (80a, 80b) of a windscreen wiper of the vehicle (90) from a first sensing unit (5a, 5b), and
- to receive at least one operational variable of the vehicle (90) from a second sensing unit (15) and
- to detect an executed vehicle wash as a function of the received movement of the at least one wiper arm (80a, 80b) and the sensed at least one operational variable of the vehicle (90).

10. Computing unit (10) according to one of Claims 7 and 8, **characterized in that** the computing unit (10) is designed to generate the first control signals for actuating the at least one washing device (30) in such a way that the at least one washing device (30) of the at least one sensor (50) is switched off temporarily as a function of a detected executed vehicle wash.

11. Computing unit (10) according to Claim 9, **characterized in that** the computing unit (10) is designed
- to generate second control signals for actuating a third sensing unit (40) for sensing the time as a function of a deactivation (210) of the at least one washing device (30) of the at least one sensor (50).

12. Vehicle (90), in particular a motor vehicle, having
- a computing unit (10) according to Claim 8, and
- at least one sensor (50) which is arranged on an outer contour of the vehicle (90), and
- at least one washing device (30) for the at least one sensor (50) which is arranged on the outer contour of the vehicle (90),
wherein the computing unit (10) is designed to detect an executed wash of an outer contour of the vehicle (10), and to actuate, as a function of a detected executed vehicle wash, the at least one washing device (30) of the at least one sensor (50) which is arranged on the outer contour of a vehicle (90) .

13. Vehicle (90) according to Claim 12, wherein the vehicle (90) additionally comprises
- a first sensing unit (5a, 5b) for sensing at least one movement of at least one wiper arm (80a, 80b) of a windscreen wiper of the vehicle (90), and
- a second sensing unit (15) for sensing at least one operational variable of the vehicle (90),
wherein the computing unit (10) is designed to receive the sensed at least one movement of the at least one wiper arm (80a, 80b) and the at least one operational variable of the vehicle (90) and to detect an executed vehicle wash as a function of the received movement of the at least one wiper arm (80a, 80b) and the sensed at least one operational variable of the vehicle (90).

14. Vehicle (90) according to one of Claims 12 and 13, wherein the vehicle (90) additionally comprises
- a third sensing unit (40), in particular a clock, for sensing the time,
wherein the computing unit (10) is designed to generate first control signals for actuating the at least one washing device (30) in such a way that the at least one washing device (30) of the at least one sensor (50) is temporarily switched off as a function of a detected executed vehicle wash, and to actuate the third sensing unit (40) as a function of a deactivation (210) of the at least one washing device (30) of the at least one sensor (50).

15. Vehicle (90) according to one of Claims 12 to 14, wherein the vehicle (90) additionally comprises
- a fourth sensing unit (25) for sensing surroundings information of the vehicle (90),
wherein the computing unit (10) is designed to detect a situation which represents an increased risk for soiling of the at least one sensor (50), arranged on the outer contour of the vehicle (90), as a function of the sensed surroundings information, and to switch on the at least one washing device (30) again as a function of a detected situation.

## Revendications

1. Procédé permettant de commander au moins un dispositif de lavage (30) d'au moins un capteur (50) disposé sur un contour extérieur d'un véhicule (90), le procédé présentant l'étape de procédé suivante consistant à :
- identifier (140) un lavage de véhicule réalisé du contour extérieur du véhicule (90),
**caractérisé en ce que** le procédé présente l'étape de procédé supplémentaire suivante consistant à :
- produire (150) des premiers signaux de commande pour piloter ledit au moins un dispositif de lavage (30) de l'au moins un capteur (50) disposé sur le contour extérieur du véhicule (90) en fonction d'un lavage de véhicule réalisé identifié.

2. Procédé selon la revendication 1, **caractérisé en ce que** les premiers signaux de commande pour le pilotage de l'au moins un dispositif de lavage (30) sont produits de telle sorte que ledit au moins un dispositif de lavage (30) de l'au moins un capteur (50) est arrêté (155) provisoirement en fonction d'un lavage de véhicule réalisé identifié.

3. Procédé selon l'une quelconque des revendications 1 et 2, **caractérisé en ce que** l'identification (140) d'un lavage de véhicule réalisé est effectuée par les étapes de procédé suivantes consistant à :
- détecter (100) au moins un mouvement d'au moins un bras d'essuie-glace (80a, 80b) d'un essuie-glace du véhicule (90), et
- détecter (110) au moins une grandeur de fonctionnement du véhicule (90), et
- identifier (140) le lavage de véhicule réalisé en fonction du mouvement détecté de l'au moins un bras d'essuie-glace (80a, 80b) et de ladite au moins une grandeur de fonctionnement détectée du véhicule (90).

4. Procédé selon la revendication 3, dans lequel ladite au moins une grandeur de fonctionnement détectée du véhicule (90) représente une vitesse de rotation détectée d'au moins une roue (16a, 16b) du véhicule (90) .

5. Procédé selon l'une quelconque des revendications 2 à 4, **caractérisé en ce que** le procédé présente l'étape de procédé supplémentaire suivante consistant à :
- détecter (160) l'heure en fonction d'un arrêt (155) de l'au moins un dispositif de lavage (30) de l'au moins un capteur (50), le procédé recommençant au début en fonction de la détection de l'heure, et ledit au moins un dispositif de lavage (30) de l'au moins un capteur (50) étant remis en marche (210) si dans une première période de temps prédéfinie aucun autre lavage de véhicule réalisé n'est identifié (200).

6. Procédé selon l'une quelconque des revendications 2 à 4, **caractérisé en ce que** le procédé présente l'étape de procédé supplémentaire suivante consistant à :
- détecter (160) l'heure en fonction d'un arrêt (155) de l'au moins un dispositif de lavage (30) de l'au moins un capteur (50), ledit au moins un dispositif de lavage (30) de l'au moins un capteur (50) étant remis en marche (210) si l'heure détectée dépasse une deuxième période de temps de sécurité prédéfinie (185).

7. Procédé selon l'une quelconque des revendications 2 à 5, **caractérisé en ce que** le procédé présente les étapes de procédé supplémentaires suivantes :
- détecter (170) des informations d'environnement du véhicule (90), et
- identifier (180) une situation qui représente un risque accru d'encrassement pour ledit au moins un capteur disposé sur le contour extérieur du véhicule en fonction des informations d'environnement détectées, et
- mettre en marche (210) ledit au moins un dispositif de lavage en fonction d'une situation identifiée.

8. Unité de calcul (10) pour commander au moins un dispositif de lavage (30) d'au moins un capteur (50) disposé sur un contour extérieur d'un véhicule (90) selon un procédé selon l'une quelconque des revendications 1 à 7, l'unité de calcul (10) étant réalisée pour
- identifier un lavage de véhicule réalisé du contour extérieur du véhicule (90), et
- produire des premiers signaux de commande pour piloter au moins un dispositif de lavage (30) d'au moins un capteur (50) disposé sur un contour extérieur d'un véhicule (90) en fonction d'un lavage de véhicule réalisé identifié.

9. Unité de calcul (10) selon la revendication 8, **caractérisée en ce que** l'unité de calcul (10) est réalisée pour
- recevoir au moins un mouvement d'au moins un bras d'essuie-glace (80a, 80b) d'un essuie-glace du véhicule (90) de la part d'une première unité de détection (5a, 5b), et
- recevoir au moins une grandeur de fonctionnement du véhicule (90) de la part d'une deuxième unité de détection (15), et
- identifier un lavage de véhicule réalisé en fonction du mouvement reçu de l'au moins un bras d'essuie-glace (80a, 80b) et de ladite au moins une grandeur de fonctionnement détectée du véhicule (90).

10. Unité de calcul (10) selon l'une quelconque des revendications 7 et 8, **caractérisée en ce que** l'unité de calcul (10) est réalisée pour produire les premiers signaux de commande pour le pilotage de l'au moins un dispositif de lavage (30) de telle sorte que ledit au moins un dispositif de lavage (30) de l'au moins un capteur (50) est provisoirement arrêté en fonction d'un lavage de véhicule réalisé identifié.

11. Unité de calcul (10) selon la revendication 9, **caractérisée en ce que** l'unité de calcul (10) est réalisée pour
- produire des deuxièmes signaux de commande pour piloter une troisième unité de détection (40) pour détecter l'heure en fonction d'un arrêt (210) de l'au moins un dispositif de lavage (30) de l'au moins un capteur (50).

12. Véhicule (90), en particulier véhicule automobile, comprenant
- une unité de calcul (10) selon la revendication 8, et
- au moins un capteur (50) disposé sur un contour extérieur du véhicule (90), et
- au moins un dispositif de lavage (30) pour ledit au moins un capteur (50) disposé sur le contour extérieur du véhicule (90),
l'unité de calcul (10) étant réalisée pour identifier un lavage réalisé d'un contour extérieur du véhicule (90), et pour piloter en fonction d'un lavage de véhicule réalisé identifié ledit au moins un dispositif de lavage (30) de l'au moins un capteur (50) disposé sur le contour extérieur d'un véhicule (90).

13. Véhicule (90) selon la revendication 12, dans lequel le véhicule (90) présente en outre
- une première unité de détection (5a, 5b) pour détecter au moins un mouvement d'au moins un bras d'essuie-glace (80a, 80b) d'un essuie-glace du véhicule (90), et
- une deuxième unité de détection (15) pour détecter au moins une grandeur de fonctionnement du véhicule (90),
l'unité de calcul (10) étant réalisée pour recevoir ledit au moins un mouvement détecté de l'au moins un bras d'essuie-glace (80a, 80b) et ladite au moins une grandeur de fonctionnement du véhicule (90), et pour identifier un lavage de véhicule réalisé en fonction du mouvement reçu de l'au moins un bras d'essuie-glace (80a, 80b) et de ladite au moins une grandeur de fonctionnement détectée du véhicule (90).

14. Véhicule (90) selon l'une quelconque des revendications 12 et 13, dans lequel le véhicule (90) présente en outre
- une troisième unité de détection (40), en particulier une horloge, pour détecter l'heure,
l'unité de calcul (10) étant réalisée pour produire des premiers signaux de commande pour le pilotage de l'au moins un dispositif de lavage (30) de telle sorte que ledit au moins un dispositif de lavage (30) de l'au moins un capteur (50) est arrêté provisoirement en fonction d'un lavage de véhicule réalisé identifié, et pour piloter la troisième unité de détection (40) en fonction d'un arrêt (210) de l'au moins un dispositif de lavage (30) de l'au moins un capteur (50).

15. Véhicule (90) selon l'une quelconque des revendications 12 à 14, dans lequel le véhicule (90) présente en outre
- une quatrième unité de détection (25) pour détecter des informations d'environnement du véhicule (90),
l'unité de calcul (10) étant réalisée pour identifier une situation qui représente un risque accru d'encrassement pour ledit au moins un capteur (50) disposé sur le contour extérieur du véhicule (90) en fonction des informations d'environnement détectées, et pour remettre en marche ledit au moins un dispositif de lavage (30) en fonction d'une situation identifiée.
